# EUROPEAN PATENT SPECIFICATION

(11) **EP 1 900 152 B1**
(45) Date of publication and mention of the grant of the patent: **03.12.2008**
(21) Application number: 05756453.6
(22) Date of filing: 04.07.2005
(51) Int. Cl.: H04L 12/28, G08C 17/02, H04L 12/24

(54) **SYSTEM COMPRISING A MASTER UNIT AND A PLURALITY OF SLAVE UNITS FOR OPERATING A PLURALITY OF DEVICES**
SYSTEM MIT EINER MASTER-EINHEIT UND MEHREREN SLAVE-EINHEITEN ZUM BETRIEB MEHRERER EINRICHTUNGEN
SYSTEME COMPRENANT UNE UNITE MAITRE ET UNE PLURALITE D UNITES ESCLAVES POUR ACTIONNER UNE PLURALITE DE DISPOSITIFS

(43) Date of publication of application: 19.03.2008
(73) Proprietor: VKR Holding A/S, 2970 Hørsholm (DK)
(72) Inventor: KJÆRSGAARD, Preben, DK-7430 Ikast (DK); BYBERG, Henrik, Raun, DK-3450 Allerød (DK); EBBE, Ulrik, Vagn, DK-2670 Greve (DK); LINDBY, Steen, DK-3400 Hillerød (DK)
(74) Representative: Olesen, Kaj
(86) International application number: PCT/DK2005/000464
(87) International publication number: WO 2007/003187

(56) References cited:
- WO-A-02/47038
- WO-A-20/05041146
- US-A- 5 187 472
- US-B1- 6 812 852

## Description

### Field of the invention

The invention relates to a system comprising at least one master unit and a plurality of slave units, said master unit and said slave units comprising means for performing preferably two-ways communication via radio frequency channels, wherein said at least one master unit comprises means for transmitting control signals to said slave units, said slave units each being provided with a unique address and each being associated with a controllable device.

### Background of the invention

In control systems of the above-mentioned type it may be time-consuming and relatively complicated to operate a plurality of devices.

In the prior art, systems have been described by means of which an enhanced user-friendliness has been aimed at and achieved. An example of such a system is described in EP 1 340 198 B1, wherein a number of units may be associated with a remote control during an initial configuration procedure. After this, a group configuration may be performed, where the units may be selected one by one and assigned to a certain group. Thus, a number of groups may be defined, involving a number of devices that may be operated simultaneously. However, the user may still have to operate the remote control a number of times in order to achieve a desired setting of different devices. Thus, users normally tend to refrain from exploiting the full potential as regards daily comfort etc. that may be achieved by means of the remotely controlled devices that are available to the user, since it may be annoying to have to operate the remote control a relatively large number of times.

Document WO 02/47038 discloses the preamble of claim 1.

Thus, it is an objective of the invention to provide such a system which has an enhanced user-friendly, and by means of which it will be easy to perform operations involving a plurality of devices.

It is also an objective of the invention to provide such a system that facilitates the time-saving features presented by e.g. a home automation system in a manner, whereby the user may take advantage of these in a relatively uncomplicated manner.

Thus, it is generally the objective of the invention to enhance the everyday comfort of the user, e.g. by motivating the user to take advantage of the available controllable devices in a home automation system in a manner adapted to the needs of the user.

These and other objectives are achieved by the invention as explained in further detail in the following.

### Summary of the invention

The invention relates to a system as specified in claim 1 comprising at least one master unit and a plurality of slave units, said master unit and said slave units comprising means for performing communication via radio frequency channels, wherein said at least one master unit comprises means for transmitting control signals to said slave units, said slave units each being provided with a unique address and each being associated with a controllable device, and wherein said at least one master unit comprises means for executing a sequential transmission of control signals to at least one of said slave units in response to an initiation indication.

Hereby it is achieved that sequential operation of one or more of the devices associated with the slave unit may be performed by a simple initiation command, e.g. a sequential operations that has been programmed in advance by the user. Furthermore, this may be accomplished in a manner allowing the slave units to, be designed in a relatively uncomplicated manner, i.e. since the master unit will comprise all information related to the operation, thereby only requiring the slave units to be able to perform one operation at a time. Also, the system may be flexible since e.g. new units may be added to the system without interfering with already programmed operations.

Preferably, as specified in claim 2, said master unit may comprise timing means for facilitating delayed execution of said transmission of control signals.

Hereby, it is achieved that a time-dependent execution of operations may be performed, e.g. the sequential transmission of control signals may comprise a control signal transmitted to e.g. a window operator 30 minutes after activation of the function control key in order to achieve that the window is opened for example 2 5 %, and after yet e.g. 10 minutes a subsequent control signal is transmitted ordering the window operator to close the window fully.

In a further preferable embodiment, as specified in claim 3 , said master unit may comprise storage means for information related to said sequential transmissions, e.g. information related to addresses for specified slave units, control information, time information etc.

Advantageously, as specified in claim 4, said slave units may be configured for transmitting an acknowledgement signal to said master unit in response to the reception of a control signal.

Hereby, it is achieved that in case a slave unit has not successfully received a control signal in the course of the execution of sequential operations, an indication hereof may be displayed on the master unit and/or the master unit may perform the step of retransmitting the specific control signal, possibly after a delay period in order to establish the desired operation.

In a further preferable embodiment, as specified in claim 5, said master unit may be configured for transmitting a status request signal to said slave units that have received a control signal, and said master unit may be configure for transmitting said status request signal after a time delay corresponding to the time taken by the slave unit to perform an operation in response to the received control signal.

Hereby, it is achieved that the master unit will be informed of, whether the desired operation has been performed with success and further, this is taking place in a manner, whereby the communication is reduced to a necessary minimum, thereby also allowing a power consuming operation for the master unit, e.g. in order to save battery power. For example, if a command signal has been transmitted to a window operator ordering a fully closing from a fully open position, the slave unit can , calculate the time that is required for the window operator to perform this operation and transmit this value to the master unit, for example when an acknowledgement signal is transmitted from the slave to the master. At the calculated time, possibly extended with a marginal additional interval, the master unit transmits a status request signal to the specific slave unit and the slave unit responds to this, e.g. by signalling that the window is now fully closed. If the status report from the slave unit indicates that the window operator is still working, the master unit may transmit a subsequent status request signal after a further period.

Advantageously, as specified in claim 6, said slave units may be addressable by said master unit in a number of sectors, wherein said master unit further has means for allocating predefined identifications to said slave units, and wherein said master unit has display means, by means of which said predefined identifications may be displayed.

Said sectors may be for example groups that comprise a number of similar or dissimilar units, rooms that comprise a number of similar or dissimilar units that are related to e.g. a room in a house, or zones, that comprise a number of similar or dissimilar units that are related to more than one room in e.g. a house.

Preferably, as specified in claim 7, said master unit may be provided with at least one predefined sequential execution of control signals, said predefined sequence being executable upon manipulation of said function control key.

Hereby, it is achieved that certain standard operation programmes may be readily available to the user, for example a ventilation programme that may serge e.g. to open all windows in for example a room, a group or a zone, when the function control key is manipulated and close all windows again after a predetermined period, possibly combined with other operations, such as for example the closing or neutralization of heating means, e.g. by - prior to the opening of the windows - setting a thermostat on stand-by for a period.

Advantageously, as specified in claim 8, said master unit may be configured for facilitating modifications of said at least one predefined sequential execution of control signals.

Hereby, it is achieved that the user may alter said standard programmes - or programs made in advance by the user - in view of the specific needs of the user.

According to a further preferable embodiment, as specified in claim 9, said master unit may be configured for receiving and storing one or more application programmes comprising predefined sequential execution of control signals.

Hereby, it is achieved that the user may be provided with such application programmes, e.g. in view of needs of the user and/or the equipment that is available at the e.g. home of the user. For example, if the user has acquired new pieces of equipment in addition to equipment already installed, it may be desirable to achieve one or more new programmes that are specifically designed for such equipment or combination of units. If for example a user has a number of window operators and now acquires a number of blinds for said window, a programme designed for e.g. a sun protection day-programme may be a desirable option. Such a standard programme may be provided on some form of storage means, may be transferred to the master unit by means of e.g. a computer/PC and/or may be provided via internet facilities. Further, hereby the user may take advantage of new programmes that are developed and delivered by provider(s). Such programmes or amendments to already stored programmes may be transferred to the master unit by means of e.g. a cable connection from e.g. a PC or the transmission may take place wirelessly, e.g. by RF-means,

According to a still further preferable embodiment, said master unit may be configured for comprising one or more application programmes comprising predefined sequential execution of control signals, wherein said master unit is configured for activating one or more of said programmes in dependence on properties of the system and in dependence of an approval.

Hereby it is achieved that the master unit may have stored a number of programs that may be inactive, e.g. the programs are stored in a memory, but are not executable. When the master unit detects that the system has achieved a property, e.g. a status, combination of equipment or a special kind of equipment that makes one of the stored programmes of possible value to the user, the master unit may "suggest" to the user that the program is made active, e.g. executable. The user may reject the program or may approve that the program is made active, in which case the program is "loaded" and the user may use the program readily or may for example adapt the program to the individual requirements

For example, a user who has a number of controllable windows but no other controllable devices will have no advantage of a program that may perform an automatic control of e.g. Venetian blinds. Thus, is the program was loaded in an operable form in the master unit, it would only serve to puzzle and possibly confuse the user. However, as soon as the user has acquired e.g. Venetian blinds to the windows, the master unit will detect this, when the system is updated, and the master unit will suggest to the user that the program maybe advantageous. If the user approves, the program is made executable.

In accordance with further aspects of the invention, as specified in claim 10, said initiation indication may comprise an activation of a function control key, a timer signal or a control signal received from a controller or a sensor.

Hereby, it is achieved that the execution of one of the programmes may be initiated in various manners. In its simplest form, the initiation takes place by e.g. pushing a function control key or program key corresponding to the desired program. Otherwise, the program may be initiated by a timer signal, e.g. at a specific time of day, week and/or year or after a preset time from the occurrence of an event. Furthermore, the program may be initiated by a signal that is received by the master unit from e.g. a sensor or controller. For example, if a ventilation programme has been stored, whereby first a number of windows are opened, the heating means are adjusted and after a further period of time the windows are closed again, this programme may be initiated by a signal from a temperature sensor indicating a high temperature, which signal is received by the master unit, where after the program is initiated.

Preferably, as specified in claim 11, said master unit may comprise means for recording and storing a number of sequences corresponding to sequential transmission of control signals, said means comprising the use of at least one function control key.

Hereby it is achieved that said programs may be assigned to a specific key, e.g. by storing the recorded operations using the specific key, of which the master unit may comprise one or more, e.g. two, three, four etc.

In a further preferable embodiment, as specified in claim 12, said master unit may be configured for executing a sequence corresponding to sequential transmission of control signals by manipulating said at least one function control key and wherein said master unit may be configured for executing a specific sequence in dependence on the manner, in which said function control key is manipulated, e.g. the number of times the key is pushed.

Hereby it is achieved that said programs may be assigned to a specific key and be activated by means of said key, preferably by manipulating the key a number of times that may correspond to e.g. a number assigned to the program. If for example four programs have been recorded and stored by means of such a program key, they may be numbered program 1, program 2 etc. Thus, the activation of a specific program may be performed by pushing the program key the corresponding number of times, e.g. activating program 3 by pushing three times. It will be understood that for practical reasons the key has to be manipulated within a predetermined time or with a maximum time limit between pushes in order to register that consecutive pushes indicate a specific program number.

In a still further preferable embodiment, as specified in claim 13, said master unit may be configured for executing a sequence corresponding to sequential transmission of control signals by manipulating said at least one function control key and wherein said master unit is configured for executing a specific sequence in dependence on manipulation of said function control key, and wherein the stored sequences are activated cyclically.

Hereby, it is achieved that a number of programs may be executed in a predefined sequence, for example the programs 1 to 4 stored on e.g. the function control key P1. As explained above, the programs may be executed by pushing the key the corresponding number of times and in accordance with this embodiment a first push on the key will initiate program 1. At a later time, when the key is pushed again, program 2 will be initiated etc. It will thus also be understood that if the key at some time is pushed quickly two times, the master unit will skip the first program in line and go to the next that will be executed etc. Hereby, it is achieved that the user will not need to remember which program, e.g. what number of key manipulations, corresponds to a certain program of a range of programs that the user takes advantage of in e.g. a daily routine. This may for example comprise a program that the user initiates when he/she wakes up, a second program that is used when he/she leaves the house, a third program that is usually initiated when the user comes home from work and a fourth program that is used before the user goes to bed. These programs may thus simply be executed by pushing the program key e.g. P1 only one time, and the user then just have to remember to initiate a program at the respective points in the daily routine. If he/she forgets to activate a program, it is a simple matter to regain correspondence with the daily routine by pushing the program key twice the next time, the user activates the program key.

Preferably, as specified in claim 14 said master unit may be configured for assigning a label, e.g. a number or name to a stored sequence corresponding to sequential transmission of control signals, and wherein a renaming is facilitated.

Hereby, an enhanced user-friendliness is achieved, since the user may be directly informed by e.g. a suitable label or name presented on the display when a program is selected. For example, with the above-mentioned four daily routine programs, the user may choose to rename the first one to "Good morning", the second one to "leaving", the third one "Home again" and the last one "Goodnight". Thus, the relevant programs will be more or less self-explanatory to the user, whereby the user further may be motivated to create more programs that may be helpful to the user in everyday routines, for example a program "TV" for adjusting blinds, light, curtains etc. when the user wants to watch TV etc.

Advantageously, as specified in claim 15, said master unit may be configured for facilitating the deletion of a stored sequence corresponding to sequential transmission of control signals, whereby the label or name may be deleted without influencing on other labels or names.

Hereby, it is achieved that a program may be deleted without creating a potential confusing condition. If for example the user is accustomed to using five programs and e.g. accustomed to pushing the key four times to activate a certain program, it would lead to mistakes if, when for example program 3 is deleted, the remaining numbers were renumbered. When the number "four" is maintained for the particular program, e.g. leaving the place number three empty, the user may still immediately find and activate the desired program that will still be activated by pushing four times.

In a further advantageous embodiment, as specified in claim 16, said master unit may be configured for facilitating an editing of a stored sequence corresponding to sequential transmission of control signals.

Hereby, it is achieved that the user may easily modify the programs that are already stored, for example in view of the user's experiences with the system or when new equipment is installed etc. instead of having to create new programs from scratch. Thus, thereby the complexity in maintaining and operating the system is reduced, also leading to an enhanced user-friendliness.

### The figures

The invention will be explained in further detail below with reference to the figures of which
- fig. 1: shows in a schematic manner a control system comprising a number of controllable devices in a house or a building,
- fig. 1a: shows in an enlarged view an illustration of controllable devices that may be associated with a window,
- fig. 2: shows an embodiment of a remote control or master unit in accordance with the invention,
- fig. 3: illustrates the establishing of rooms in the control system,
- fig. 4: illustrates a division or grouping of controllable devices into sectors according to a further embodiment of the invention, and
- figs. 5 - 7: illustrates the recording of programs and the use of the program keys.

### Detailed description

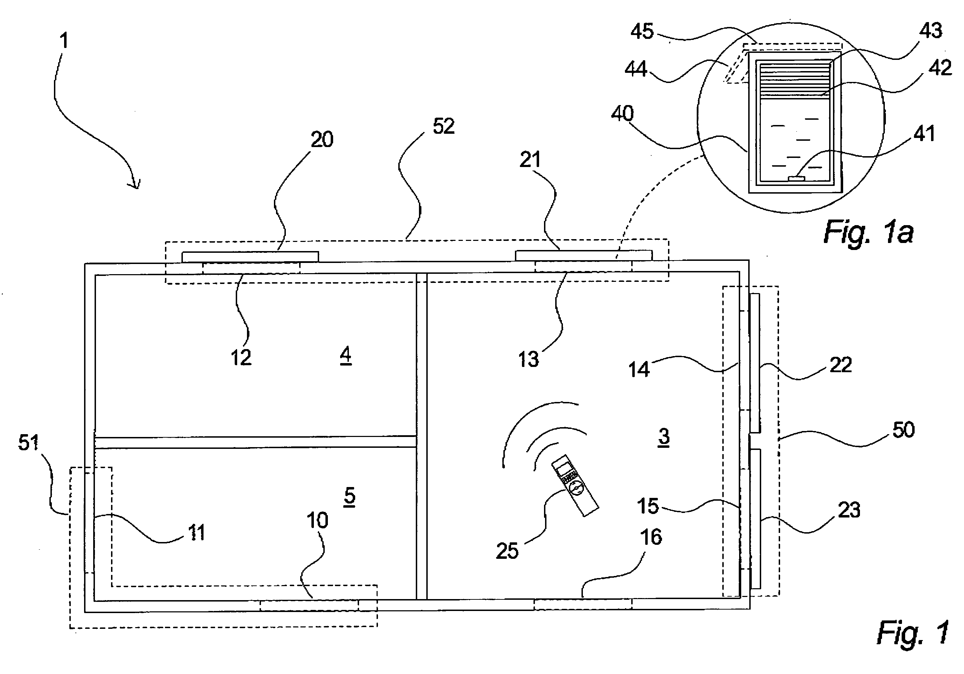

An example of a control system according to an embodiment of the invention, e.g. a home automation system or part thereof, is illustrated in fig. 1. Here, a building, a house, an apartment or the like 1 is illustrated in a schematic manner, wherein a number of devices, e.g. equipment and fittings, which are controlled by a system in accordance with the invention, are furthermore illustrated in a general manner.

The house or apartment 1 may comprise a number of rooms, for example the rooms 3, 4 and 5, and in these rooms a number of windows 10, 11, 12, 13, 14, 15 and 16 may be located. Further, some of these windows may be provided with awnings 20, 21, 22 and 23 as also illustrated. It will be understood that these pieces of equipment are only examples of devices that may be controlled by means of the system, e.g. by means of one or more remote controls 25. Such remote controls are also referred to as master units in the following.

Thus, it will be understood that a window 40 may as shown in fig. 1a comprise e.g. a window actuator, operator or opener 41, a Venetian blind 42 that may be operated by drive means 43 and an awning 44 placed outside the window and operated by drive means 45.

Other examples of devices and equipment that may be controlled by such a system are motorized shutters, blinds and curtains, garage doors, roof windows, heating and cooling systems, alarms, lighting equipment, locks etc.

The devices, equipment etc. that are controlled by means of the system, are associated with slave units, e.g. means for receiving control signals from the remote control(s) 25 and for operating in accordance with received signals. Such means may comprise radio frequency receiving and transmitting means, although it will be understood that some devices may be connected by e.g. a wire bus that may serve to transmit signals from a common RF receiver to the respective slave units associated with the respective devices etc.

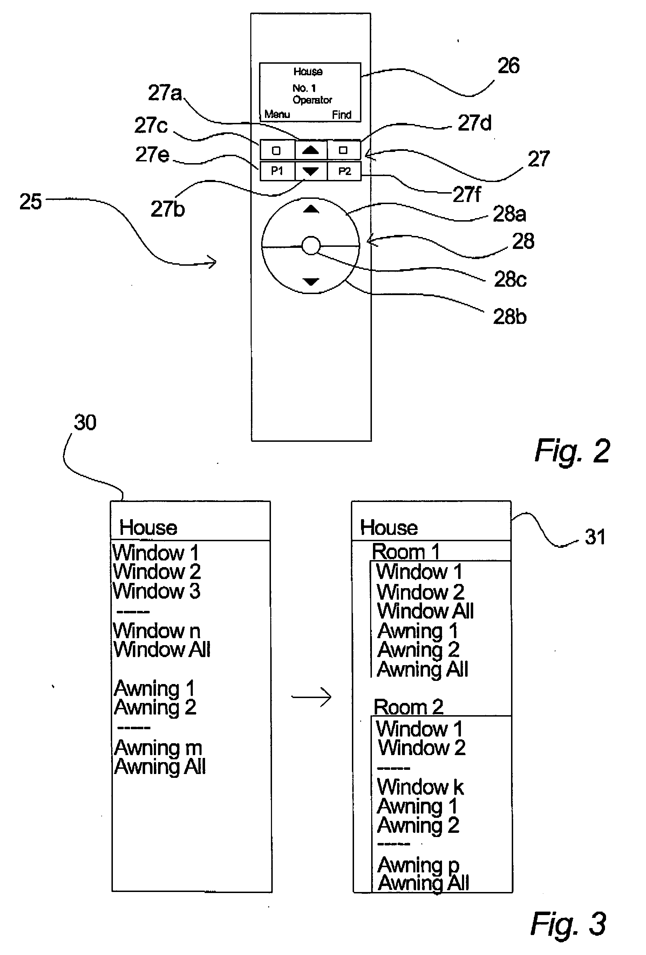

An example of a remote control or master unit 25 is shown in further detail in fig. 2. This remote control comprises RF receiving and transmitting means, a power source such as a battery, storing means, control means etc., and further as shown in fig. 2, the remote control comprises operating means in the form of a display 26, an operating keypad 27 for e.g. displaying information on the display 26, for selecting options, devices etc. and control keys 28 for e.g. operating a selected device.

When a system according to the invention has been installed, an initial set-up or configuration must be performed whereby e.g. an automatic registration of the devices is performed. This may be initiated by means of the remote control 25, e.g. by means of the operating means. Such an automatic registration may involve the transmittal of a unique code from the remote control to all remote-controlled devices, e.g. slave units that are in proximity of the remote control 25 communication-wise. In accordance with a predefined procedure, for example as described in EP 1340 198 B1, the slave units will during this procedure transmit a response signal to the remote control 25, containing information in the form of an address and the type of the slave unit, e.g. a window operator, an awning, blinds etc.

The exchange of addresses and of the code may take place by the exchange of an address and of the code being completed between one slave unit and the master unit/remote control 25 before carrying out the exchange between the following slave units and the remote control and this initiation process may continue sequentially until the last of the slave units has transmitted its address and type and has received the code. The sequence of configuration of the respective units may be determined in various ways and may e.g. be determined by the units being susceptible to the initiation signal at different time intervals which may be mutually independent and potentially randomly divided between the units. The unit with which the susceptible time interval and an initiation signal first coincide will thus be configured first etc.

Obviously, such an initial configuration procedure may be performed in other manners.

When the auto configuration has been completed, the system is ready for operation. The remote control 25 has now stored a list of devices including the address for each and the type, e.g. window operator, blind, awning light etc.

Furthermore, the master unit is configured for arranging the slave units or devices, which have now been associated with the master unit, in such a manner that the slave units are shown in a list on the display 26 assembled in accordance with the type of equipment and with a numbering, e.g. showing first window operator no. 1 - 7, blind no. 1 - 5, awning no. 1 - 4 etc. The user may for example scroll up and down this list, e.g. using the navigation keys 27a and 27b, until a device is found and selected, in which case the device may be operated by means of the keys 28a, 28b and 28c.

In order to make the operation of the system easy and logic, the master unit 25 facilitates a division or grouping into sectors, e.g. groups of the available controllable units, which will be further explained in the following.

As long as the available controllable units are arranged as described above the display means 26 of the master unit will involve only two levels, i.e. "House", which, when selected, will be replaced by the list of all units, or, if a "Find" command is used, the desired type can be found before going into the number-level. This is illustrated in fig. 3, where the box 30 represents this arrangement of the available units. Here, it is also shown that when more than two units of the same type is present, the master unit has automatically created a "All"-group, for example "All window operators".

First, a room may be defined, for example the room 3 in fig. 1.

This may be done by selecting a "Menu", and here select a menu-item, where a sector such as e.g. a room can be created. Here, the individual units may be selected and allocated to the room, i.e. by pressing the key 27c to enter the unit in the "room". It is noted that when a device or unit is selected, it is possible to observe which unit has been selected by pressing the control, keys 28 for a brief period of time. Further units can be selected and added to the "room" as described, until the "room" is finally stored as e.g. "Room 1". This is illustrated in fig. 3 with the box 31.

When a room has been created, the master unit will offer to save all remaining units in a room, e.g. "Room 2" as show in fig. 3, or, if this is refused, the display will return to the list from which remaining products/units can be selected for a new room, etc. It is noted that when units has been selected for a room and the room is stored, the units are automatically renumbered as also indicated in fig. 3.

As explained, a "Room" may comprise the controllable units in a specific room, for example the room 3 in fig. 1. Here, the window operators 13 - 16 are selected, the awnings 21 - 23 and, if other types of equipment are provided, for example blinds, roller shutters, light etc, these may be included as well. When the room has been established, which as explained above means that at least one more "room" is created, the master unit may now involve one more level. When "House" is selected, it will according to his embodiment be possible to choose between e.g. "Room 1" and "Room 2" as illustrated with the box 31 in fig. 3. Here after, it will be possible to select all units of a certain type or it will be possible to scroll between the units in the room.

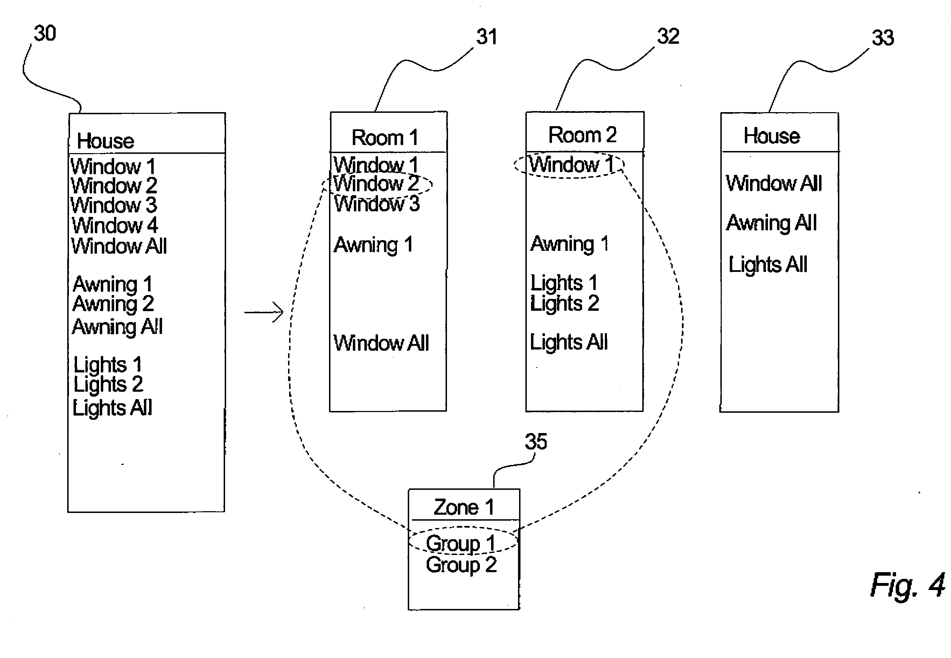

Another manner of arranging the division or grouping of controllable devices into sectors is illustrated in fig. 4.

After the initial auto-configuration a listing as shown at 30 will be available to the user, comprising four windows, three awnings, two lights and further three "all"-groups.

The user now creates a room, "room 1", as shown at 31 comprising three windows and one awning. As mentioned above, an "all" group is also automatically created when the room is stored. Further, the remaining devices are assigned to a "room" as shown at 32. Now, when the user wants to operate the devises, the user may select "room", in which case he/she will be able to select one of the two rooms and subsequently the devices and group(s) comprised in the room.

Furthermore, it will be possible for the user instead to choose the "house" as indicated at 33, in which case the user will be presented with the option of selecting a particular type of device and a specific one of these devices etc.

However, the creation of a sector in the form of a zone is also illustrated in fig. 4. A zone may be defined as a group that is created across the already defined rooms.

If for example the user selects e.g. "window 2" from "room 1" and "window 1" from "room 2" and wishes to create a group consisting of the se, a zone 35 will be created, e.g. "zone 1", which comprises a group, "group 1" consisting of the two windows.

As mentioned above, such a zone may be renamed, for example into "south zone", whereby the windows in "group 1" will be identified as the windows placed in this zone.

As shown in fig. 1 and as described in connection with fig. 4, it may further be possible to create a group consisting of a number of units of similar or dissimilar types in a specific room, for example a group 50 consisting of the awnings 22 and 23 in the room 3 or a group 51 consisting of the window operators for the windows 10 and 11 in the room 5.

As further shown in fig. 1, it is possible to create a special grouping which will be referred to as a "zone" for the purposes of this application. Such a zone comprises units of the same type or different types, but located in different "rooms". This is illustrated in fig. 1 with the zone 52 consisting for example of the awning 20 located in the room 4 and the awning 21 in the room 3. When such a zone has been created, it is made possible to operate these devices simultaneously, for example the awnings located at the south-facing wall. It should be mentioned that zones may not only cover different rooms in the same level, but also rooms at different levels, for example in a house having a ground floor and a first floor, e.g. an attic.

The master unit 25 also comprises features enabling the user to rename the defined sectors, e.g. groups, rooms, zones etc. into names that may be user-defined and enables the user to readily realize what the selected sector comprises, e.g. by using for example "kitchen", "bedroom", "south facade" instead of numbers for identifying the specific sectors.

Further, the master unit 25 facilitates that the user may specify the ratio of actuation, e.g. for opening a window or group of windows 40%, which for example maybe done by selecting the specific item on the display 26, activating the key 28a continuously until a 40% ratio is displayed on the display and then releasing the key, where after the actuation takes place.

Furthermore, the master unit comprises timer means for facilitating delayed or time-specified actuation, which may be performed ina number of ways. A timer set-function may be selected and a specific item, e.g. a window or a group of windows may be selected, where after a operation may be defined, for example a 100% opening. Further, a subsequent operation may then be chosen, for example closing to a 10%. position. A timer may be selected for the closing operation and set by means of the keyboard 27, 28 and the display 26.

The master unit 25 also facilitates the establishing of programmed operations of the items available for actuation, e.g. individual devices, groups, rooms, groups in zones and rooms etc., which may take place also incorporating actuation to a certain position and including the use of the timer means, for example with delayed actuation, actuation at a predefined time - real-time actuation, etc.

This is done for example by selecting a "record program" menu-item, performing the respective keypad-operations in order to achieve the desired actuations for the selected devices and/or sectors of devices, and storing the program by e.g. pressing one of the program-keys 27e or 27f (P1 or P2), of which more than two may be available.

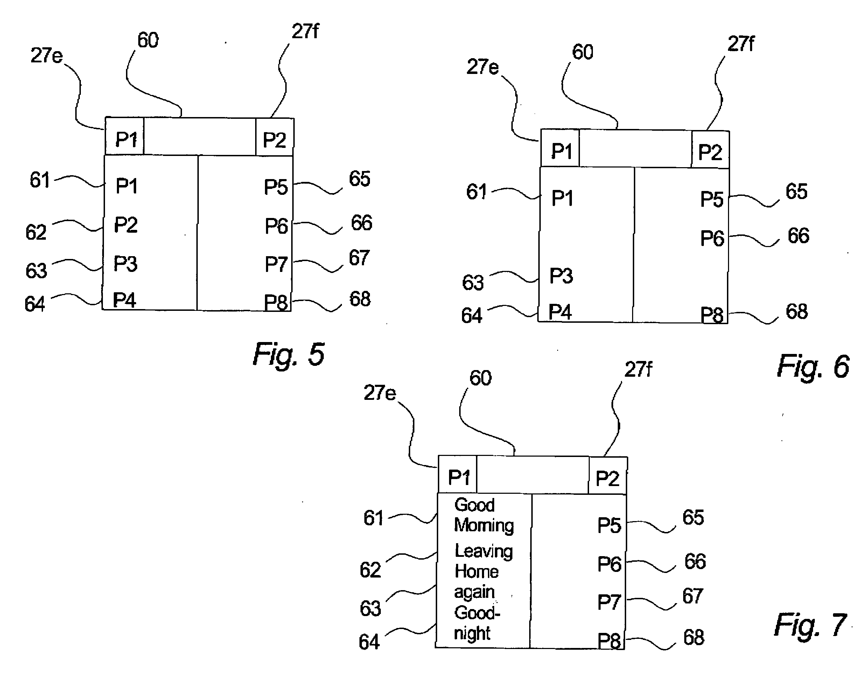

Further, these program-keys 27e and 27f may each be related to more than one program, for example four, five, six etc., depending on the master unit in question. For example, as illustrated with the box 60 in fig. 5, four programs may be allocated to each program key 27e and 27f. These programs 61 to 68 may be stored as they are programmed, e.g. the first program stored using the key 27e is stored as the program P1, the next one is stored as P2 etc. The first program stored using the key 27f is stored as P5 etc.

When executing these program, the program key in question is manipulated, e.g. pushed a number of times corresponding to the number, e.g. in order to execute program P3, the key 27e is pushed three times, in order to execute the program P6, the key 27f is pushed two times etc. It is noted that in order to achieve this functionality, the key must be pressed relatively quickly, for example with a maximum time between pushes of 2 seconds.

In accordance with the invention it is possible to edit the stored programs, e.g. by selecting the relevant program from a list showing the programs and selecting a edit-function.

Further it is possible to delete the one or more of programs, in which case it is arranged that the remaining programs maintain their names. This is illustrated in fig. 6 that corresponds to fig. 5, but with the programs 62 and 67 deleted as shown, the deletions leave empty places, which has the advantage that the user, which now has the habit of pushing the key 27e three times in order to activate the program P3, still has to do this to activate the program, even though this program cannot be said to be the third program under the key 27e. Similarly regards the key 27f, where the user still has to push the key four times in order to execute the program P8.

Another manner of operating the program-features of the master unit allows the user to execute the programs cyclically. By pushing the key 27e once, the program 61 is executed. The next time the key is pushed, the next program 62 will be executed etc., which may be useful when the programs relate to actuations that takes place as a part of the daily routine. Thus, the user will not need to remember which program, e.g. what number of key manipulations, that corresponds to a certain program of a range of programs that the user takes advantage of in e.g. a daily routine. This may for example comprise a program that the user initiates when he/she wakes up, a second program that is used when he/she leaves the house, a third program that is usually initiated when the user comes home from work and a fourth program that is used before the user goes to bed. These programs may thus simply be executed by pushing the program key e.g. P1 only one time, and the user then just have to remember to initiate a program at the respective points in the daily routine. If he/she forgets to activate a program, it is a simple matter to regain correspondence with the daily routine by pushing the program key twice the next time, the user activates the program key.

As shown in fig. 7, the master unit 27 facilitates the naming of the recorded programs and the re-naming as well, which further facilitate the user-friendliness of the system. The user will then not need to remember, what for example P6 performs, but the user may assign a name to this program, that to the user indicates the purpose and function of the program. As shown in fig. 7, the programs P1 to P4, that may be daily routine programs, may be named "Good Morning", "Leaving (for work)", "Home Again" and "Goodnight". Thus, if the user is in doubt whether he/she has activated the last program, it will be apparent to the user, when these labels are shown on the display.

As explained, the user may record and store programs, but further standard programs may be provided, for example programs that presumably will suit most users, possibly after minor editing. Further, such programs may be made available to the user, when he/she have acquired new devices that provides further possibilities to the user, e.g. in view of the combination of items that the user has, e.g. new programmes that are specifically designed for such equipment or combination of units.

If for example a user has a number of window operators and now acquires a number of blinds for said window, a program designed for e.g. a sun protection day-programme may be a desirable option. Such a standard programme may be provided on some form of storage means, may be transferred to the master unit by means of e.g. a computer/PC and/or may be provided via internet facilities. Further, hereby the user may take advantage of new programmes that are developed and delivered by provider(s). Such programmes or amendments to already stored programmes may be transferred to the master unit by means of e.g. a cable connection from e.g. a PC or the transmission may take place wirelessly, e.g. by RF-means.

Further, the master unit may be configured for comprising one or more application programmes comprising predefined sequential execution of control signals, and the master unit may be configured for activating one or more of said programmes in dependence on properties of the system and in dependence of an approval.

Thus, the master unit may have stored a number of programs that may be inactive, e.g. the programs are stored in a memory, but are not executable. When the master unit detects that the system has achieved a property, e.g. a status, combination of equipment or a special kind of equipment that makes one of the stored programmes of possible value to the user, the master unit may "suggest" to the user that the program is made active, e.g. executable. The user may reject the program or may approve that the program is made active, in which case the program is "loaded" and the user may use the program readily or may for example adapt the program to the individual requirements

For example, a user who has a number of controllable windows but no other controllable devices will have no advantage of a program that may perform an automatic control of e.g. Venetian blinds. Thus, is the program was loaded in an operable form in the master unit, it would only serve to puzzle and possibly confuse the user. However, as soon as the user has acquired e.g. Venetian blinds to the windows, the master unit will detect this, when the system is updated, and the master unit will suggest to the user that the program maybe advantageous. If the user approves, the program is made executable.

It will be understood that the invention is not limited to the particular examples described above and illustrated in the drawings but may be modified in numerous manners and used in a variety of applications within the scope of the invention as specified in the claims.

## Claims

1. System comprising at least one master unit and a plurality of slave units, said master unit and said slave units comprising means for performing communication, wherein said at least one master unit comprises means for transmitting control signals to said slave units, said slave units each being provided with a unique address and each being associated with a controllable device, wherein said at least one master unit comprises means for executing a sequential transmission of control signals to at least one of said slave units in response to an initiation indication, and wherein said master unit is configured for comprising one or more application programs comprising predefined sequential execution of control signals, said system being **characterised in that** said means for performing communication are adapted to perform communication via radio frequency channels end **in that** said master unit is configured for activating one or more of said programs in dependence on properties of the system and in dependence of an approval.

2. System according to claim 1, wherein said master unit comprises timing means for facilitating delayed execution of said transmission of control signals.

3. System according to claim 1 or 2, wherein said master unit comprises storage means for information related to said sequential transmissions, e.g. information related to addresses for specified slave units, control information, time information etc.

4. System according to claim 1, 2 or 3, wherein said slave units are configured for transmitting an acknowledgement signal to said master unit in response to the reception of a control signal.

5. System according to any of the preceding claims, wherein said master unit is configured for transmitting a status request signal to said slave units that have received a control signal and that said master unit is configured for transmitting said status request signal after a time delay corresponding to the time taken by the slave unit to perform an operation in response to the received control signal.

6. System according to any of the preceding claims, wherein said slave units are addressable by said master unit in a number of sectors, wherein said master unit further has means for allocating predefined identifications to said slave units, and wherein said master unit has display means, by means of which said predefined identifications may be displayed.

7. System according to any of the preceding claims, wherein said master unit is provided with at least one predefined sequential execution of control signals, said predefined sequence being executable upon manipulation of said function control key.

8. System according to claim 7, wherein said master unit is configured for facilitating modifications of said at least one predefined sequential execution of control signals.

9. System according to claim 7 or 8, wherein said master unit is configured for receiving and storing one or more application programmes comprising predefined sequential execution of control signals.

10. System according to any of the preceding claims, wherein said initiation indication comprises an activation of a function control key, a timer signal or a control signal received from a controller or a sensor.

11. System according to any of the preceding claims, wherein said master unit comprises means for recording and storing a number of sequences corresponding to sequential transmission of control signals, said means comprising the use of at least one function control key.

12. System according to claim 11, wherein said master unit is configured for executing a sequence corresponding to sequential transmission of control signals by manipulating said at least one function control key and wherein said master unit is configured for executing at specific sequence in dependence on the manner, in which said function control key is manipulated, e.g. the number of times the key is pushed.

13. System according to claim 11 or 12, wherein said master unit is configured for executing a sequence corresponding to sequential transmission of control signals by manipulating said at least one function control key and wherein said master unit is configured for executing a specific sequence in dependence on manipulation of said function control key, and wherein the stored sequences are activated cyclically.

14. System according to claim 12 or 13, wherein said master unit is configured for assigning a label, e.g. a number or name to a stored sequence corresponding to sequential transmission of control signals, and wherein a renaming is facilitated.

15. System according to claim 12 or 13, wherein said master unit is configured for facilitating the deletion of a stored sequence corresponding to sequential transmission of control signals, whereby the label or name is deleted without influencing on other labels or names.

16. System according to any of the preceding claims, wherein said master unit is configured for facilitating an editing of a stored sequence corresponding to sequential transmission of control signals.

## Patentansprüche

1. System umfassend mindestens eine Master-Einheit und eine Anzahl von Slave-Einheiten, wobei die Master-Einheit und die Slave-Einheiten Mittel zur Durchführung von Kommunikation umfassen, wobei die mindestens eine Mastereinheit Mittel zum Senden von Steuersignalen zu den Slave-Einheiten umfaßt, die Slave-Einheiten jeweils mit einer eindeutigen Adresse versehen sind und jeweils einer steuerbaren Einrichtung zugeordnet sind, wobei die mindestens eine Master-Einheit Mittel zum Ausführen einer sequentiellen Übertragung von Steuersignalen zu mindestens einer der Slave-Einheiten in Ansprache auf eine Initiierungsanzeige umfaßt, und wobei die Master-Einheit dazu vorgesehen ist, dass sie eines oder mehrere eine vorgegebene sequentielle Ausführung von Steuersignalen beinhaltende Anwendungsprogramme umfaßt, wobei das System **dadurch gekennzeichnet ist, dass** die Mittel zur Durchführung von Kommunikation zum Kommunizieren über Hochfrequenzkanäle geeignet sind, und dass die Master-Einheit dazu vorgesehen ist, eines oder mehrere der Programme in Abhängigkeit von Eigenschaften des Systems und in Abhängigkeit von einer Freigabe zu aktivieren.

2. System nach Anspruch 1, wobei die Master-Einheit Zeitgebermittel umfaßt, um eine verzögerte Ausführung der Übertragung von Steuersignalen zu ermöglichen.

3. System nach Anspruch 1 oder 2, wobei die Master-Einheit Speichermittel für mit den sequentiellen Übertragungen in Beziehung stehende Information, z.B. mit Adressen für spezifizierte Slave-Einheiten in Beziehung stehende Information, Steuerinformation, Zeitinformation, etc., umfaßt.

4. System nach Anspruch 1, 2 oder 3, wobei die Slave-Einheiten dazu vorgesehen sind, in Antwort auf den Empfang eines Steuersignals ein Bestätigungssignal an die Master-Einheit zu senden.

5. System nach einem der vorhergehenden Ansprüche, wobei die Master-Einheit dazu vorgesehen ist, ein Statusabfragesignal an die Slave-Einheiten, die ein Steuersignal empfangen haben, zu senden, und dass die Master-Einheit dazu vorgesehen ist, das Statusabfragesignal nach einer Zeitverzögerung zu senden, die der Zeit entspricht, welche die Slave-Einheit benötigt, um einen Vorgang in Ansprache auf das empfangene Steuersignal durchzuführen.

6. System nach einem der vorhergehenden Ansprüche, wobei die Slave-Einheiten durch die Master-Einheit in einer Anzahl von Sektoren adressierbar sind, wobei die Master-Einheit weiterhin Mittel zum Vergeben vordefinierter Identifikationen an die Slave-Einheiten aufweist, und wobei die Master-Einheit Display-Mittel aufweist, durch welche die vordefinierten Identifikationen angezeigt werden können.

7. System nach einem der vorhergehenden Ansprüche, wobei die Master-Einheit für mindestens eine vordefinierte sequentielle Ausführung von Steuersignalen vorgesehen ist, wobei die vordefinierte Sequenz auf Betätigung einer Funktionssteuertaste hin ausführbar ist.

8. System nach Anspruch 7, wobei die Master-Einheit dazu vorgesehen ist, Modifikationen der mindestens einen vordefinierten sequentiellen Ausführung von Steuersignalen zu ermöglichen.

9. System nach Anspruch 7 oder 8, wobei die Master-Einheit dazu vorgesehen ist, eines oder mehrere eine vordefinierte sequentielle Ausführung von Steuersignalen umfassende Anwendungsprogramme aufzunehmen und zu speichern.

10. System nach einem der vorhergehenden Ansprüche, wobei die Initiierungsanzeige eine Aktivierung einer Funktionssteuertaste, ein Zeitgebersignal oder ein von einem Controller oder einem Sensor empfangenes Steuersignal umfaßt.

11. System nach einem der vorhergehenden Ansprüche, wobei die Master-Einheit Mittel zum Aufzeichnen und Speichern einer Anzahl von Sequenzen, die einer sequentiellen Übertragung von Steuersignalen entsprechen, umfaßt, wobei die Mittel den Gebrauch von mindestens einer Funktionssteuertaste umfassen.

12. System nach Anspruch 11, wobei die Master-Einheit dazu vorgesehen ist, eine Sequenz auszuführen, die einer sequentiellen Übertragung von Steuersignalen durch Betätigen der mindestens einen Funktionssteuertaste entspricht, und wobei die Master-Einheit dazu vorgesehen ist, eine spezifische Sequenz auszuführen in Abhängigkeit von der Weise, in welcher die Funktionssteuertaste betätigt wird, z.B. der Anzahl von Malen, die die Taste gedrückt wird.

13. System nach Anspruch 11 oder 12, wobei die Master-Einheit dazu vorgesehen ist, eine Sequenz auszuführen, die einer sequentiellen Übertragung von Steuersignalen durch Betätigen der mindestens einen Funktionssteuertaste entspricht, und wobei die Master-Einheit dazu vorgesehen ist, eine spezifische Sequenz in Abhängigkeit von einer Betätigung der Funktionssteuertaste auszuführen, und wobei die gespeicherten Sequenzen zyklisch aktiviert werden.

14. System nach Anspruch 12 oder 13, wobei die Master-Einheit dazu vorgesehen ist, einer gespeicherten Sequenz, die einer sequentiellen Übertragung von Steuersignalen entspricht, ein Kennzeichen, z.B. eine Zahl oder einen Namen, zuzuordnen, und wobei die Möglichkeit einer Umbenennung vorgesehen ist.

15. System nach Anspruch 12 oder 13, wobei die Master-Einheit dazu vorgesehen ist, das Löschen einer gespeicherten Sequenz, die einer sequentiellen Übertragung von Steuersignalen entspricht, zu ermöglichen, wodurch das Kennzeichen oder der Name gelöscht wird, ohne andere Kennzeichen oder Namen zu beeinträchtigen.

16. System nach einem der vorhergehenden Ansprüche, wobei die Master-Einheit dazu vorgesehen ist, ein Editieren einer gespeicherten Sequenz, die einer sequentiellen Übertragung von Steuersignalen entspricht, zu ermöglichen.

## Revendications

1. Système comprenant au moins une unité maître et une pluralité d'unités esclaves, ladite unité maître et lesdites unités esclaves comprenant des moyens pour effectuer une communication, dans lequel ladite au moins une unité maître comprend des moyens pour transmettre des signaux de commande aux dites unités esclaves, lesdites unités esclaves étant chacune munie d'une adresse unique, et chacune étant associée à un dispositif contrôlable, dans lequel ladite au moins une unité maître comprend des moyens pour exécuter une transmission séquentielle de signaux de commande à au moins l'une desdites unités esclaves en réponse à une indication de lancement, et dans lequel ladite unité maître est configurée pour comprendre un ou plusieurs programmes d'application comprenant l'exécution séquentielle prédéfinie de signaux de commande, ledit système étant **caractérisé en ce que** lesdits moyens pour effectuer une communication sont aptes à effectuer une communication par le biais de canaux de radiofréquence et **en ce que** ladite unité maître est configurée pour activer un ou plusieurs desdits programmes en fonction des propriétés du système et en fonction d'une approbation.

2. Système selon la revendication 1, dans lequel ladite unité maître comprend des moyens de timing pour faciliter l'exécution retardée de ladite transmission de signaux de commande.

3. Système selon la revendication 1 ou 2, dans lequel ladite unité maître comprend des moyens de mémorisation d'informations se rapportant aux dites transmissions séquentielles, par exemple des informations se rapportant à des adresses d'unités esclaves spécifiées, des informations de commande, des informations de temps, etc.

4. Système sur la revendication 1, 2 ou 3, dans lequel lesdites unités esclaves sont configurées pour transmettre un signal d'accusé de réception à ladite unité maître en réponse à la réception d'un signal de commande.

5. Système selon l'une quelconque des revendications précédentes, dans lequel ladite unité maître est configurée pour transmettre un signal de demande de statut aux dites unités esclaves qui ont reçu un signal de commande et ladite unité maître est configurée pour transmettre ledit signal de demande de statut après une temporisation correspondant au temps qu'il a fallu à l'unité esclave pour effectuer une opération en réponse au signal de commande reçu.

6. Système selon l'une quelconque des revendications précédentes, dans lequel lesdites unités esclaves sont adressables par ladite unité maître dans un certain nombre de secteurs, dans lequel ladite unité maître a en outre des moyens pour allouer des identifications prédéfinies aux dites unités esclaves, et dans lequel ladite unité maître a des moyens d'affichage, par le biais desquels lesdites identifications prédéfinies peuvent être affichées.

7. Système selon l'une quelconque des revendications précédentes, dans lequel ladite unité maître est munie d'au moins une exécution séquentielle prédéfinie de signaux de commande, ladite séquence prédéfinie étant exécutable à la manipulation d'une touche de commande de fonction.

8. Système selon la revendication 7, dans lequel ladite unité maître est configurée pour faciliter des modifications de ladite au moins une exécution séquentielle prédéfinie de signaux de commande.

9. Système selon la revendication 7 ou 8, dans lequel ladite unité maître est configurée pour recevoir et mémoriser un ou plusieurs programmes d'application comprenant une exécution séquentielle prédéfinie de signaux de commande.

10. Système selon l'une quelconque des revendications précédentes, dans lequel ladite indication de lancement comprend une activation d'une touche de commande de fonction, un signal de temporisation ou un signal de commande reçu d'un contrôleur ou d'un capteur.

11. Système selon l'une quelconque des revendications précédentes, dans lequel ladite unité maître comprend de moyens pour enregistrer et mémoriser un certain nombre de séquences correspondant à une transmission séquentielle de signaux de commande, lesdits moyens comprenant l'utilisation d'au moins une touche de commande de fonction.

12. Système selon la revendication 11, dans lequel ladite unité maître est configurée pour exécuter une séquence correspondant à une transmission séquentielle de signaux de commande en manipulant ladite au moins une touche de commande de fonction et dans lequel ladite unité maître est configurée pour exécuter une séquence spécifique en fonction de la manière dont ladite touche de commande de fonction est manipulée, par exemple le nombre de fois que la touche est enfoncée.

13. Système selon la revendication 11 ou 12, dans lequel ladite unité maître est configurée pour exécuter une séquence correspondant à une transmission séquentielle de signaux de commande en manipulant ladite au moins une touche de commande de fonction et dans lequel ladite unité maître est configurée pour exécuter une séquence spécifique en fonction de la manipulation de ladite touche de commande de fonction, et dans lequel les séquences mémorisées sont activées cycliquement.

14. Système selon la revendication 12 ou 13, dans lequel ladite unité maître est configurée pour affecter un libellé, par exemple un numéro ou un nom, à une séquence mémorisée correspondant à une transmission séquentielle de signaux de commande, et dans lequel un renommage est facilité.

15. Système selon la revendication 12 ou 13, dans lequel ladite unité maître est configurée pour faciliter la suppression d'une séquence mémorisée correspondant à une transmission séquentielle de signaux de commande, de telle manière que le libellé ou le nom soit supprimé sans influencer d'autres libellés ou d'autres noms.

16. Système selon l'une quelconque des revendications précédentes, dans lequel ladite unité maître est configurée pour faciliter une modification d'une séquence mémorisée correspondant à une transmission séquentielle de signaux de commande.
